**Europäisches Patentamt**

**European Patent Office**

**Office européen des brevets**

(11) Veröffentlichungsnummer: **0 319 782 B1**

## (12) EUROPÄISCHE PATENTSCHRIFT

(45) Veröffentlichungstag der Patentschrift: **18.11.93**

(21) Anmeldenummer: **88119543.2**

(22) Anmeldetag: **24.11.88**

(51) Int. Cl.⁵: **H04B 7/08**

(30) Priorität: **09.12.87 DE 3741698**

(43) Veröffentlichungstag der Anmeldung:
**14.06.89 Patentblatt 89/24**

(45) Bekanntmachung des Hinweises auf die
Patenterteilung:
**18.11.93 Patentblatt 93/46**

(84) Benannte Vertragsstaaten:
**AT CH DE ES FR GB IT LI SE**

(56) Entgegenhaltungen:
**EP-A- 0 199 058**
**WO-A-85/02309**

(54) **Empfänger für Radiowellen mit mehreren Antennen.**

(73) Patentinhaber: **Blaupunkt-Werke GmbH**
**Postfach 77 77 77,**
**Robert-Bosch-Strasse 200**
**D-31132 Hildesheim(DE)**

(72) Erfinder: **Bochmann, Harald, Dr.**
**Stöckener Strasse 125**
**D-3000 Hannover 21(DE)**
Erfinder: **Wiedemann, Kurt**
**Bismarckplatz 5**
**D-3200 Hildesheim(DE)**

(74) Vertreter: **Eilers, Norbert, Dipl.-Phys.**
**Blaupunkt-Werke GmbH,**
**Patente und Lizenzen,**
**Postfach 77 77 77**
**D-31132 Hildesheim (DE)**

## Beschreibung

Die Erfindung geht aus von einem Empfänger nach der Gattung des Hauptanspruchs.

Die erreichbare Qualität, insbesondere des UKW-Empfangs in Fahrzeugen, wird im wesentlichen durch Mehrwege-Empfang sowie durch von fremden Fahrzeugen ausgehende Zündstörungen negativ beeinflußt.

Da die Empfangsbedingungen in fahrenden Fahrzeugen ständig wechseln, erscheint der Einsatz einer Richtantenne, welche beim stationären Empfang im allgemeinen eine entscheidende Qualitätsverbesserung bewirkt, hier nicht ohne weiteres möglich. Vielmehr werden Antennen für Kraftfahrzeuge im Hinblick auf eine möglichst richtungsunabhängige Empfindlichkeit ausgelegt. Zur Empfangsverbesserung sind Verfahren mit mehreren Antennen, sogenannter Diversity-Empfang, bekannt, bei welchen jedoch die Auswahl des Antennensignals allein nach der Feldstärke erfolgt, wobei diese Auswahl nicht unbedingt mit der Optimierung des Störabstandes einhergeht.

Es ist ferner ein Verfahren bekannt geworden (EP-A-0 199 058 bzw. DE-A-35 10 580), bei welchem phasenkorrigierte Zwischenfrequenzsignale zweier Antennen mit einstellbaren Koeffizienten bewertet und überlagert werden. Die Ermittlung dieser Koeffizienten erfolgt dabei durch eine digitale Steuerung, welche jeweils überprüft, ob kleine Änderungen der Phasenlage der Zwischenfrequenzsignale zueinander jeweils eine Vergrößerung oder Verkleinerung der Gesamt-Zwischenfrequenzamplitude bewirken. Bewirkt eine derartige Änderung eine Verkleinerung der Gesamt-Zwischenfrequenzamplitude, wird die Änderung der Phasenlage rückgängig gemacht, während bei Größerwerden der Amplitude die Änderung der Phasenlage weiter vergrößert wird. Die digitale Steuerung benötigt jedoch für die versuchsweise Änderung der Phasenlage und die anschließende Messung der Gesamt-Zwischenfrequenzsamplitude Zeit, die insbesondere bei einem Versuch in die falsche Richtung die Geschwindigkeit des Einstellvorgangs beeinträchtigt.

Der erfindungsgemäße Empfänger mit den kennzeichnenden Merkmalen des Hauptanspruchs vermeidet diesen Nachteil, was insbesondere einer größeren Zahl von Antennen den Einstellvorgang gegenüber dem bekannten Verfahren erheblich beschleunigt.

Der erfindungsgemäße Empfänger eignet sich zum Empfang von Radiowellen, die nach verschiedenen Verfahren moduliert sind, wobei die Amplitude im wesentlichen unabhängig von dem Modulationssignal ist. Dementsprechend kommt eine Anwendung insbesondere der frequenzmodulierten, phasenmodulierten und/oder pulsmodulierten Radiowellen in Betracht.

Durch die in den Unteransprüchen aufgeführten Maßnahmen sind vorteilhafte Weiterbildungen und Verbesserungen der im Hauptanspruch angegebenen Erfindung möglich.

Ausführungsbeispiele der Erfindung sind in der Zeichnung anhand mehrerer Figuren dargestellt und in der nachfolgenden Beschreibung näher erläutert. Es zeigt:

Fig. 1     ein Blockschaltbild eines erfindungsgemäßen Empfängers,

Fig. 2     ein Blockschaltbild eines ersten Ausführungsbeispiels für eine bei dem Empfänger nach Fig. 1 verwendeten Steuereinrichtung,

Fig. 3     ein zweites Ausführungsbeispiel einer Steuereinrichtung,

Fig. 4     ein Blockschaltbild eines in den Ausführungsbeispielen nach Fig. 2 und Fig. 3 verwendeten Phasendiskriminators,

Fig. 5     ein Simulationsmodell einer Antennenanordnung,

Fig. 6     resultierende Antennenrichtdiagramme bei der Richtungsänderung einer einfallenden Welle,

Fig. 7     resultierende Antennenrichtdiagramme bei dem Einfall mehrerer Wellen,

Fig. 8     Diagramme der Zwischenfrequenzamplitude des Zwischenfrequenzpegels und des demodulierten Signals bei dem erfindungsgemäßen Empfänger und

Fig. 9     entsprechende Signale bei einem bekannten Empfänger.

Gleiche Teile sind in den Figuren mit gleichen Bezugszeichen versehen.

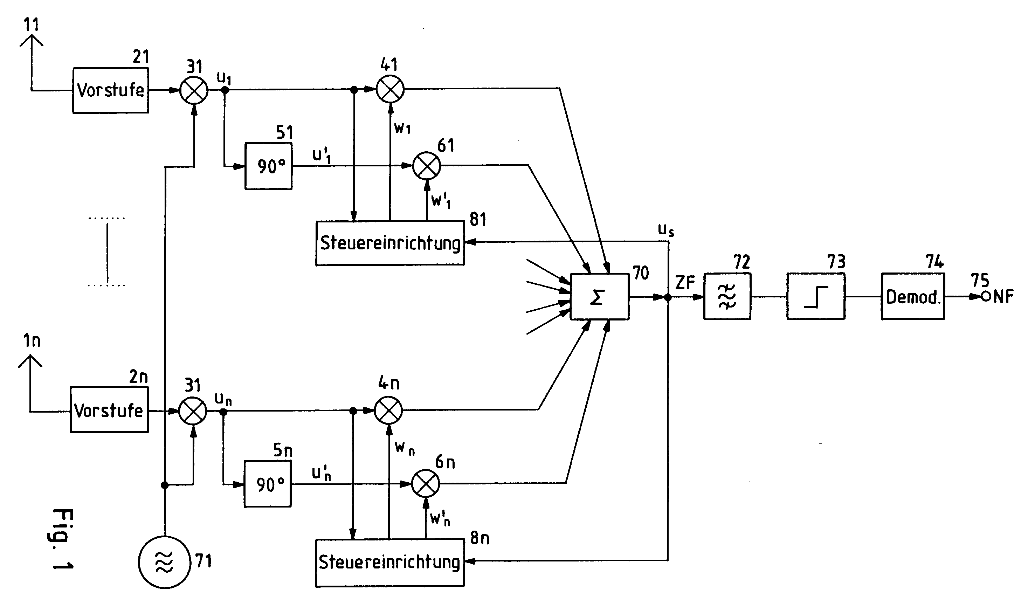

Bei der Schaltungsanordnung nach Fig. 1 sind mehrere Antennen 11 bis 1n vorgesehen, von denen lediglich die Antenne 11 und 1n dargestellt sind. Jeweils einer Antenne ist eine Vorstufe 21 bis 2n zugeordnet, deren Ausgangssignal je einem Mischer 31 bis 3n zugeführt ist. Mit jeweils einem weiteren Eingang der Mischer 31 bis 3n ist ein durchstimmbarer Oszillator 71 verbunden. Die somit entstandenen Mischsignale $u_1$ bis $u_n$ werden einerseits über Multiplizierer 41 bis 4n und andererseits über Phasendrehglieder 51 bis 5n und weitere Multiplizierer 61 bis 6n Eingängen einer Summierschaltung 70 zugeführt. Das am Ausgang der Summierschaltung 70 anstehende Summensignal wird in an sich bekannter Weise einem Zwischenfrequenzverstärker, der aus einem Filter 72 und einem Begrenzer 73 besteht, zugeführt, an den sich ein Demodulator 74 anschließt, an dessen Ausgang 75 die niederfrequenten Signale zur Verfügung stehen.

Mit Hilfe von Steuereinrichtungen 81 bis 8n werden den Multiplizierern 41 bis 4n und 61 bis 6n Koeffizienten zugeführt, mit denen die Mischsignale $u_1$ bis $u_n$ und die um 90° phasengedrehten Mischsignale $u_1'$ bis $u_n'$ bewertet werden, wobei die den Multiplizierern 41 bis 4n zugeführten Koeffizienten jeweils als Realteil und die den Multiplizierern 61 bis 6n zugeführten Koeffizienten jeweils als Imaginärteil eines komplexen Koeffizienten $w_i$ aufgefaßt werden können.

Jeweils eine der Steuereinrichtungen 81 bis 8n dient zur Bewertung eines der Mischsignale $u_1$ bis $u_n$ und des dazugehörigen um 90° phasengedrehten Mischsignals $u_1'$ bis $u_n'$.

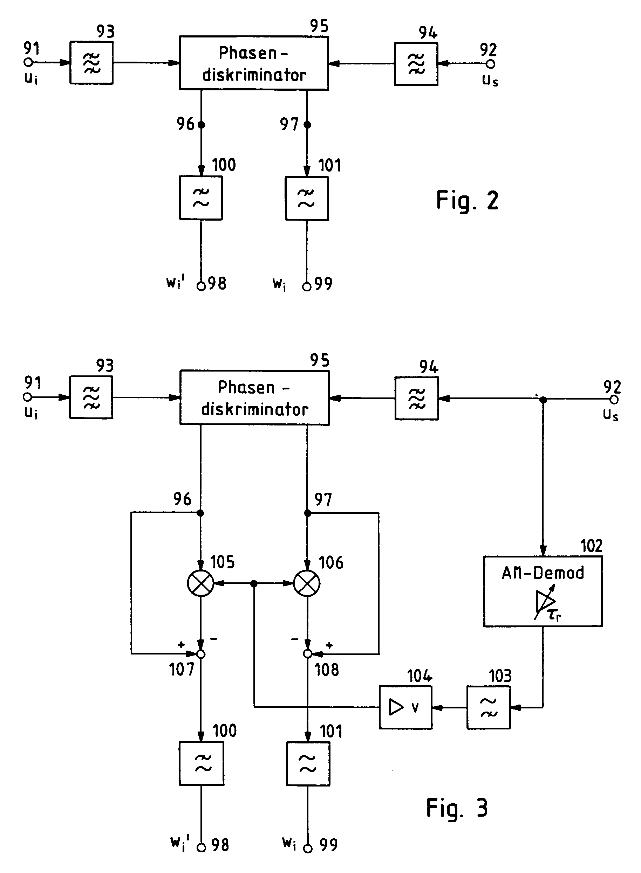

Fig. 2 zeigt ein erstes Ausführungsbeispiel einer Steuereinrichtung in stark vereinfachter Form. Zur Messung der Phasendifferenz zwischen dem jeweiligen Mischsignal $u_i$ (i = 1 bis n) und dem Summensignal $u_s$ werden beide Signale über jeweils einen Eingang 91, 92 und einen Bandpaß 93, 94 einem Phasendiskriminator 95 zugeführt. Mit Hilfe der Bandpässe 93, 94 wird die Messung der Phasendifferenz auf das Nutzsendersignal beschränkt. Die Bandpässe 93, 94 beeinflussen zwar die Phasenlagen der Nutzsignale, infolge des symmetrischen Aufbaus ist der Einfluß auf beide zugeführten Signale im wesentlichen gleich, so daß eine Verfälschung des Meßergebnisses vernachlässigbar ist.

Der Phasendiskriminator 95 hat zwei Ausgänge 96, 97, an welchen jeweils Signale anstehen, die proportional zum Sinus bzw. proportional zum Cosinus des Phasenwinkels zwischen den Eingangssignalen des Phasendiskriminators sind. An den Ausgängen 98, 99 der nachgeschalteten Tiefpässen 100, 101 sind Steuerspannungen abnehmbar. Vom Ausgang 99 wird die Steuerspannung, welche den Realteil des Koeffinzienten $w_i$ dargestellt, der jeweiligen Multiplizierschaltung 41 bis 4n zugeführt, während die Multiplizierschaltung 61 bis 6n für die 90° phasengedrehten Mischsignale mit entsprechenden Ausgängen 98 der Steuereinrichtungen 81 bis 8n verbunden sind.

Bei dem Ausführungsbeispiel nach Fig. 2 wird zur Steuerung nicht die Amplitude des Summensignals $u_s$ benutzt. Es findet demnach keine Regelung statt, welche die Koeffizienten derart verstellt, daß die Amplitude des Summensignals ein Maximum aufweist. Es wird vielmehr aufgrund der jeweiligen Phasendifferenz zwischen einem Mischsignal und dem Summensignal das Mischsignal derart in der Phase gedreht, daß es positiv zum Summensignal beiträgt.

Durch eine Kombination des anhand von Fig. 2 beschriebenen Verfahrens mit einer zusätzlichen Auswertung des Summensignals wie sie im Ausführungsbeispiel der nicht vorveröffentlichten Patentanmeldung EP-A-0263357 beschrieben wurde, gelingt es, sowohl eine optimale Einstellung auf den Nutzsender herbeizuführen als auch diejenigen Empfangsrichtungen auszublenden, aus denen frequenzselektiven Schwund verursachende Echos einfallen.

Den grundsätzlichen Aufbau einer derartigen Steuereinrichtung zeigt Fig. 3. Dabei wird jeweils eines der Mischsignale $u_i$ und das Summensignal $u_s$ wie bei der Steuereinrichtung nach Fig. 2 einem Phasendiskriminator 95 zugeführt. Das Summensignal gelangt außerdem an den Eingang eines Amplitudendemodulators 102. Dabei umfaßt der Amplitudendemodulator einen geregelten Vorverstärker. Dieses und der nachgeschaltete Hochpaß 103 tragen dazu bei, daß der Modulationsgrad des Summensignals nahezu unabhängig vom mittleren Signalpegel ermittelt wird. Das Ausgangssignal des Hochpasses 103 wird aus den Faktor v in einem Verstärker 104 verstärkt und zwei Multiplikatoren 105, 106 zugeführt, welche ferner mit den Ausgangssignalen des Phasendiskriminators 95 beaufschlagt sind. Die Ausgangssignale der Multiplikatoren 105, 106 werden in Subtrahierschaltungen 107 und 108 von den Ausgangssignalen des Phasendiskriminators 95 subtrahiert, wonach die Ergebnisse der Subtraktion wie bei dem Ausführungsbeispiel nach Fig. 2 tiefpaßgefiltert und von den Ausgängen 98, 99 den Multiplizierern 41 bis 4n bzw. 61 bis 6n zugeleitet werden.

Die Grenzfrequenzen der Tiefpässe 100, 101 in Verbindung mit dem Verstärkungsfaktor v des Verstärkers 104 bestimmen das Gewicht, mit dem die beiden unterschiedlichen Fehlerkriterien (Phasenabweichung zwischen $u_i$ und $u_s$ und Amplitude $d_s$ Summensignals) auf den Einstellvorgang einwirken.

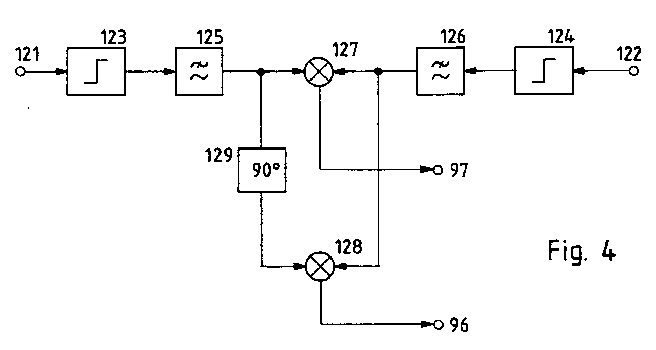

Fig. 4 zeigt ein Blockschaltbild eines Phasendiskriminators, der sich für die Verwendung in den Schaltungen gemäß Fig. 2 und Fig. 3 eignet. Die zu vergleichenden Signale werden den Eingängen 121 und 122 zugeführt und jeweils über einen Amplitudenbegrenzer 123, 124 und einen Tiefpaß 125, 126 geleitet. Die Amplitudenbegrenzer verhindern, daß Amplitudenschwankungen der zu vergleichenden Signale das Meßergebnis verfälschen. Die durch die Amplitudenbegrenzung entstandenen Oberschwingungen werden in den Tiefpässen 125, 126 unterdrückt.

Die Ausgangssignale der Tiefpässe 125, 126 werden zwei symmetrischen Mischern bzw. Analog-Multiplizierern 127, 128 zugeführt, wobei zwischen dem Ausgang des Tiefpasses 125 und dem entsprechenden Eingang des Mischers 128 ein 90°-Phasendrehglied 129 vorgesehen ist. Die Ausgangsspannungen der Mischer 127, 128 enthalten einen Gleichspannungsanteil, der dem Cosinus bzw. dem Sinus der Phasendifferenz proportional ist, sowie einen Wechselspannungsanteil, dessen Frequenz doppelt so groß wie die Frequenz der zu vergleichenden Signale ist. Der Wechselspannungsanteil wird mit Hilfe von nachgeschalteten Tiefpässen 100, 101 (Fig. 2 und 3) ausgefiltert.

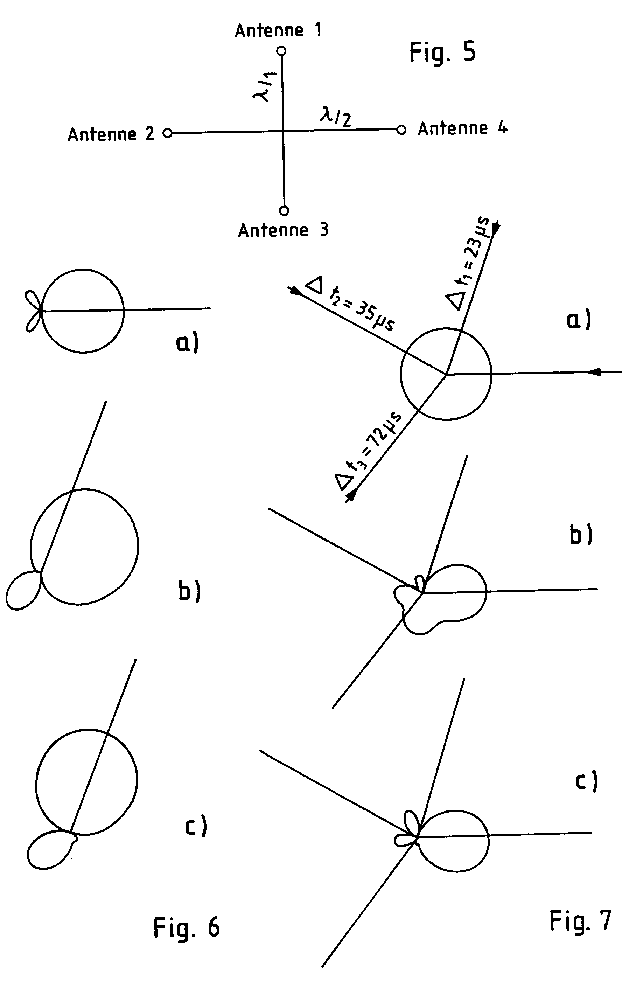

Anhand der Figuren 5 bis 9 wird die Verbesserung des Empfangs mit dem erfindungsgemäßen Empfänger, welcher nach dem Ausführungsbeispiel gemäß Fig. 3 ausgelegt ist, dargestellt. Dabei zeigen die Figuren 6 bis 9 Ergebnisse einer Simulation, welcher die in Fig. 5 dargestellte Anordnung von vier Empfangsantennen zugrundeliegt. Der Abstand der jeweils diagonal angeordneten Strahler ist dabei gleich einer halben Wellenlänge.

Fig. 6a) zeigt das resultierende Antennenrichtdiagramm, welches sich bei einer von rechts einfallenden ebenen Welle im eingeschwungenen Zustand einstellt. Eine abrupte Änderung der Einfallsrichtung führt über das in Fig. 6b) exemplarisch dargestellte transiente Richtdiagramm zu einem neuen stationären Richtdiagramm gemäß Fig. 6c).

Fig. 7 erläutert das Verhalten des erfindungsgemäßen Empfängers bei frequenzselektivem Schwund. Die Geradenabschnitte kennzeichnen dabei die Amplituden sowie die Einfallsrichtungen der direkten Welle bzw. der um die Zeiten delta t1 bis delta t3 verzögert eintreffenden Echos. Die Anfangswerte der Stellkoeffizienten zu Beginn des Adaptionsvorgangs sind willkürlich gewählt. Die Simulation wurde durchgeführt für die Trägerfrequenz von 100 MHz, wobei die Modulationsfrequenz 2 KHz und der Frequenzhub ±75 KHz betrug.

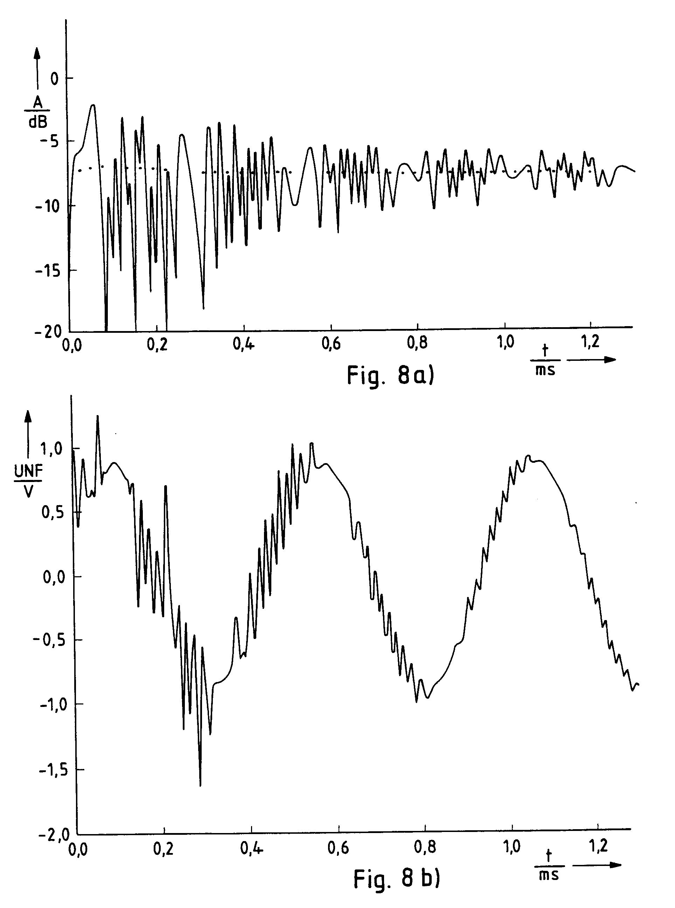

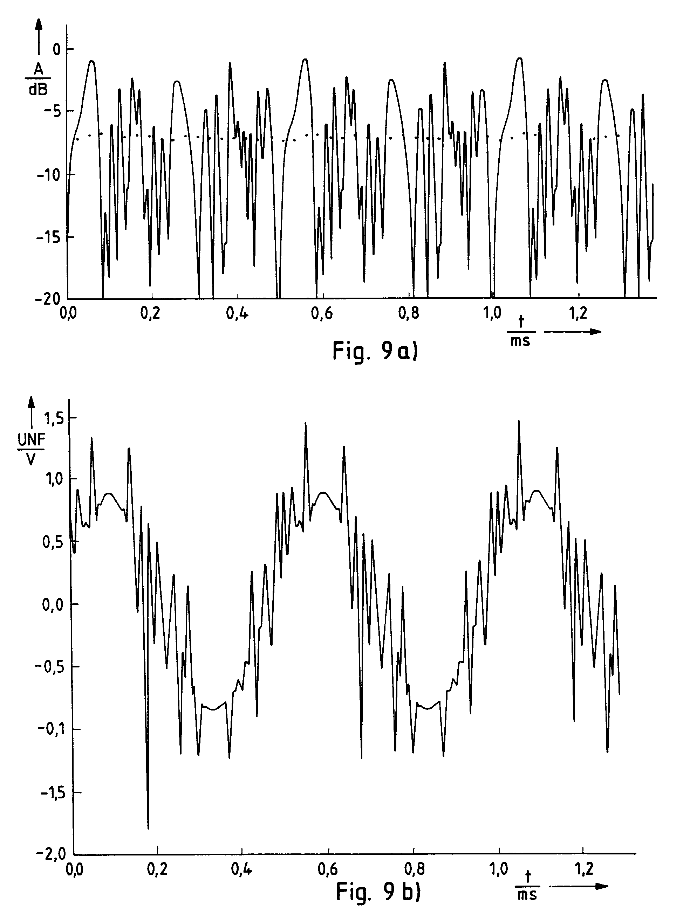

Fig. 8a) zeigt den Zeitverlauf der Zwischenfreqenzamplitude (Amplitude des Summensignals) $U_s$ und punktiert den Zwischenfrequenzpegel während des Einstellvorgangs. Ebenfalls während des Einstellvorgangs zeigt Fig. 8b) das zugehörige demodulierte Signal UNF. Man erkennt, daß die Störung schon nach etwa einer ms bis auf einen geringen Rest abgeklungen ist. Zum Vergleich sind in Fig. 9a) die Zeitverläufe der Zwischenfrequenzamplitude und des Zwischenfrequenzpegels sowie in Fig. 9b) der Zeitverlauf des demodulierten Signals dargestellt, wie sie in einem herkömmlichen Empfänger auftreten.

**Patentansprüche**

1. Schaltungsanordnung zum Empfang von Radiowellen im VHF-Bereich in Fahrzeugen
   - mit mehreren Antennen (11, 1n) für diesen Empfang,
   - mit einem UKW-Empfänger (72 bis 75), der einen Zwischenfrequenzverstärker (72, 73) umfaßt, und
   - mit einer die Antenne mit dem UKW-Empfänger verbindenden Schaltung (21 bis 71), in der jede Antenne (11, 1n) über eine Vorstufe (21, 2n) an einen Signaleingang eines zugeordneten Mischers angeschlossen ist, ferner
   - mit steuerbaren Phasenschiebern (41, 4n) in den Ausgängen jedes Mischers, und einer Addierstufe (70) vor dem Zwischenfrequenzverstärker (72, 73) sowie
   - mit einem AM-Demodulator (102), der an einen Ausgang des ZF-Verstärkers (72, 73) angeschlossen ist, an dem ein unbegrenztes Zwischenfrequenzsignal abnehmbar ist, und Steuereinrichtungen für die Phasenschieber, die mit dem AM-Demodulator verbunden ist,

dadurch gekennzeichnet,
daß der Ausgang des Amplitudendemodulators (102) in jeder Steuereinrichtung (8i) mit ersten Eingängen von Multiplikatoren (105, 106) verbunden ist und daß die zweiten Eingänge der Multiplikatoren an den Ausgang eines Phasendiskriminators (95) angeschlossen sind, in dem das Ausgangssignal ($u_s$) der Addierstufe (70) mit dem durch die zugeordneten Phasenschieber (4i, 4n) beeinflußbaren Mischsignal ($u_i$) verglichen wird, wobei die Ausgänge der Multiplikatoren (105, 106) mit den Steuereingängen der Phasenschieber (4i, 4n) verbunden sind.

2. Schaltungsanordnung nach Anspruch 1,
   dadurch gekennzeichnet,
   daß jeder Multiplikator (105) eine Subtrahierschaltung (107) umfaßt, deren zweiter Eingang mit dem zugeordneten Ausgang (96) des Phasendiskriminators (95) verbunden ist.

3. Schaltungsanordnung nach Anspruch 1 oder 2,
   dadurch gekennzeichnet,
   daß der Amplitudendemodulator (102) über einen Hochpaß (103) mit den Multiplikatoren (105, 106) verbunden ist.

4. Schaltungsanordnung nach Anspruch 1, 2 oder 3,
   dadurch gekennzeichnet,
   daß dem Amplitudendemodulator (102) in jeder Steuereinheit ein Verstärker (104) nachgeschaltet ist, dessen Verstärkungsfaktor in Abhängigkeit von der Grenzfrequenz von Tiefpässen (100) gewählt ist, die an den Ausgängen (96) des Phasendiskriminators (95) liegen.

**Claims**

1. Circuit arrangement for the reception of radio waves in the VHF range in vehicles
   - having a plurality of aerials (11, 1n) for this reception,

- having a VHF receiver (72 to 75), which comprises an intermediate-frequency amplifier (72, 73), and
- having a circuit (21 to 71) connecting the aerial to the VHF receiver, in which circuit each aerial (11, 1n) is connected via a preliminary stage (21, 2n) to a signal input of an assigned mixer, furthermore
- having controllable phase shifters (41, 4n) in the outputs of each mixer, and an adding stage (70) upstream of the intermediate-frequency amplifier (72, 73) and also
- having an AM demodulator (102), which is connected to an output of the IF amplifier (72, 73), at which an unlimited intermediate-frequency signal can be picked off, and control devices for the phase shifters, which are connected to the AM demodulator,

characterised in that the output of the amplitude modulator (102) in each control device (8i) is connected to first inputs of multipliers (105, 106) and in that the second inputs of the multipliers are connected to the output of a phase discriminator (95), in which the output signal ($u_s$) of the adding stage (70) is compared with the mixed signal ($u_i$), which can be influenced by the assigned phase shifter (4i, 4n), the outputs of the multipliers (105, 106) being connected to the control inputs of the phase shifters (4i, 4n).

2. Circuit arrangement according to Claim 1, characterised in that each multiplier (105) comprises a subtracting circuit (107), the second input of which is connected to the assigned output (96) of the phase discriminator (95).

3. Circuit arrangement according to Claim 1 or 2, characterised in that the amplitude demodulator (102) is connected via a high-pass filter (103) to the multipliers (105, 106).

4. Circuit arrangement according to Claim 1, 2 or 3, characterised in that there is connected downstream of each amplitude demodulator (102) in each control unit an amplifier (104), the gain factor of which is chosen in dependence on the cut-off frequency of low-pass filters (100), which lie at the outputs (96) of the phase discriminator (95).

**Revendications**

1. Agencement de circuit pour la réception dans des véhicules d'ondes radio dans la zone des ondes métriques

- avec plusieurs antennes (11, 1n) pour cette réception,
- avec un récepteur d'ondes métriques (72 à 75) comprenant un amplificateur de fréquence intermédiaire (72, 73) et
- avec un circuit (21 à 71) reliant l'antenne au récepteur d'ondes métriques et dans lequel chaque antenne (11, 1n) est reliée par l'intermédiaire d'un stade antérieur (21, 2n) à une entrée de signal d'un mélangeur associé,
- et en outre, avec des déphaseurs (41, 4n) susceptibles d'être commandés dans les sorties de chaque mélangeur, et un étage de totalisation (70) en amont de l'amplificateur de fréquence intermédiaire (72, 73),
- ainsi qu'avec un démodulateur AM (102) raccordé à une sortie de l'amplificateur de fréquence intermédiaire (72, 73) à laquelle on peut prélever un signal de fréquence intermédiaire non limité, et avec des dispositifs de commande pour le déphaseur qui est relié au démodulateur AM,

agencement de circuit caractérisé en ce que la sortie du démodulateur d'amplitude (102) dans chaque dispositif de commande (8i) est reliée aux premières entrées de multiplicateurs (105, 106), et en ce que les secondes entrées des multiplicateurs sont raccordées à la sortie d'un discriminateur de phase (95) dans lequel le signal de sortie ($u_s$) de l'étage de totalisation (70) est comparé au signal de mélangeur ($u_i$) susceptible d'être influencé par le déphaseur associé (4i, 4n), tandis que les sorties des multiplicateurs (105, 106) sont reliées aux entrées de commande des déphaseurs (4i, 4n).

2. Agencement de circuit selon la revendication 1, caractérisé en ce que chaque multiplicateur (105) comprend un circuit de soustraction (107) dont la seconde entrée est reliée à la sortie correspondante (96) du discriminateur de phase (95).

3. Agencement de circuit selon la revendication 1 ou la revendication 2, caractérisé en ce que le modulateur d'amplitude (102) est relié aux multiplicateurs (105, 106) par l'intermédiaire d'un filtre passe-haut (103).

4. Agencement de circuit selon la revendication 1, 2 ou 3, caractérisé en ce qu'un amplificateur (104) est branché à la suite du modulateur d'amplitude (102) dans chaque unité de commande, amplificateur dont le facteur d'amplification est choisi en fonction de la fréquence

**EP 0 319 782 B1**

limite d'un filtre passe-bas (100) placé aux sorties (96) du discriminateur de phase (95).

Fig. 1

Fig. 2

Fig. 3

Fig. 4

Antenne 1

Fig. 5

$\lambda/1$

Antenne 2    $\lambda/2$    Antenne 4

Antenne 3

a)

a)

$\Delta t_1 = 23\,\mu s$

$\Delta t_2 = 35\,\mu s$

$\Delta t_3 = 72\,\mu s$

b)

b)

c)

c)

Fig. 6

Fig. 7

Fig. 8a)

Fig. 8 b)

Fig. 9 a)

Fig. 9 b)